(19) Europäisches Patentamt / European Patent Office / Office européen des brevets

(11) **EP 3 977 580 B1**

(12) **EUROPÄISCHE PATENTSCHRIFT**

(45) Veröffentlichungstag und Bekanntmachung des Hinweises auf die Patenterteilung:
**14.02.2024 Patentblatt 2024/07**

(21) Anmeldenummer: **19752933.2**

(22) Anmeldetag: **23.07.2019**

(51) Internationale Patentklassifikation (IPC):
**H02J 3/06** (2006.01)   **H02J 3/16** (2006.01)
**H02J 3/18** (2006.01)

(52) Gemeinsame Patentklassifikation (CPC):
**H02J 3/06; H02J 3/16; H02J 3/1814;** Y02E 40/10

(86) Internationale Anmeldenummer:
**PCT/EP2019/069810**

(87) Internationale Veröffentlichungsnummer:
**WO 2021/013341 (28.01.2021 Gazette 2021/04)**

(54) **VORRICHTUNG ZUM VERBINDEN ZWEIER WECHSELSPANNUNGSNETZE UND VERFAHREN ZUM BETREIBEN DER VORRICHTUNG**

DEVICE FOR CONNECTING TWO ALTERNATING VOLTAGE NETWORKS AND METHOD FOR OPERATING THE DEVICE

DISPOSITIF DE CONNEXION DE DEUX RÉSEAUX DE TENSION ALTERNATIVE ET PROCÉDÉ DE FONCTIONNEMENT DU DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.04.2022 Patentblatt 2022/14**

(73) Patentinhaber: **Siemens Energy Global GmbH & Co. KG**
**81739 München (DE)**

(72) Erfinder:
• **GRIEPENTROG, Gerd**
**91468 Gutenstetten (DE)**
• **MÜLLER, Holger**
**91096 Möhrendorf (DE)**
• **RENTSCHLER, Alexander**
**64625 Bensheim (DE)**

(56) Entgegenhaltungen:
**EP-A2- 0 129 492     EP-A2- 3 518 366**
**WO-A1-2017/101963**

**EP 3 977 580 B1**

**Beschreibung**

Die Erfindung betrifft eine Verbindungsvorrichtung zum Verbinden zweier n-phasiger Wechselspannungsnetze gleicher Frequenz. Beispielsweise kann es sich dabei um 50Hz- oder 60Hz-Netze handeln, wobei gleiche Frequenz im vorliegenden Kontext eine gleiche vorgegebene Nennfrequenz bezeichnet.

Üblicherweise sind Mittel- und Hochspannungsnetze in hierarchischen Topologien organisiert. Zum Beispiel wird Leistung aus einem Hochspannungsnetz (Spannung oberhalb von 100 kV) in die Mittelspannungsebene (Spannung > 1kV) übertragen (bzw. umgekehrt). Verschiedene Mittelspannungsnetze sind daher oftmals nur durch die übergeordnete Hochspannungsebene indirekt miteinander verbunden.

Durch die zunehmende Verbreitung dezentraler Energieeinspeisungen (Photovoltaik, Windkraft) stehen die Verteilnetzbetreiber vor zunehmenden technischen und wirtschaftlichen Herausforderungen, die entsprechende Leistungs- und Energiebilanz in deren Netzabschnitten zu organisieren. Es ist daher oft wünschenswert, Wirkleistung und Blindleistung zwischen unterschiedlichen Mittelspannungsnetzen in kontrollierbarer Weise zu übertragen. Dies trifft insbesondere auch auf wirtschaftlich eigenständige Netzabschnitte zu. Die Leistungsübertragung dient dabei beispielsweise der Vermeidung von auftretenden Spitzen in Leistungsbezug aus dem zugeordneten Hochspannungsnetz, wodurch Betriebskosten reduziert werden können.

Aus dem Stand der Technik sind artgemäße Vorrichtungen bekannt, die zwei Stromrichter umfassen, die gleichspannungsseitig miteinander und wechselspannungsseitig jeweils mit einem zugeordneten der Wechselspannungsnetze verbunden sind. Diese bekannte Lösung ist jedoch aufwendig und kostenintensiv, weil zwei auf die volle Spannung der Wechselspannungsnetze ausgelegte Stromrichter bereitgestellt werden müssen.

Bekannt ist des Weiteren die Kopplung der Wechselspannungsnetze über steuerbare Impedanzen, wie beispielsweise einen Thyristor Controlled Reactor (TCR). Diese Lösung ist nachteilig mit einem Oberschwingungsanteil im resultierenden Strom verbunden, so dass zusätzlich veränderbare Saugkreise bzw. Filter notwendig sind.

Aus der WO 2017/101963 ist eine Vorrichtung zum Steuern eines Lastflusses in einem Wechselspannungsnetz bekannt. Die bekannte Vorrichtung umfasst seriell in eine Phasenleitung des Wechselspannungsnetzes einfügbaren Modulreihenschaltung zweipoliger Schaltmodule, wobei jedes Schaltmodul einen Energiespeicher sowie ansteuerbare, ein- und abschaltbare Leistungshalbleiter aufweist.

Eine Parallelschaltung zweier Suszeptanzgruppen je eine Phasenleitung des Wechselspannungsnetzes ist aus der EP 0 129 492 A2 bzw. der EP 3 518 366 A2 bekannt.

Ferner ist es möglich, die beiden Wechselspannungsnetze mittels eines Phase Shift Transformators (PST) zu koppeln. Dies ist ein Transformator, der durch die Umschaltung von Wicklungen die Phasenverschiebung verändert und damit den Leistungsfluss zwischen den Wechselspannungsnetzen beeinflusst. Der Aufbau des PST ist allerdings sehr aufwendig, da die Transformatorwicklungen mit einer hohen Anzahl an Anzapfungen ausgestattet werden müssen. Der Leistungsfluss kann mittels der Umschaltungen nur stufig beeinflusst werden. Des Weiteren ist die Anzahl bzw. Häufigkeit der Umschaltungen aufgrund der begrenzten Lebensdauer der mechanischen Kontakte eingeschränkt, was wiederum einen nachteiligen Einfluss auf die erzielbare Dynamik des PST hat.

Die Aufgabe der Erfindung besteht darin, eine artgemäße Vorrichtung vorzuschlagen, die eine kostengünstige und zuverlässige Möglichkeit zur Kopplung zweier Wechselspannungsnetze unterschiedlicher Spannungsphasenlagen bietet.

Die Aufgabe wird erfindungsgemäß durch eine artgemäße Verbindungsvorrichtung nach Anspruch 1 gelöst, die n Suszeptanzelemente mit jeweils stufenlos veränderbaren Suszeptanzwerten (Blindleitwerte) umfasst, wobei mittels jedes Suszeptanzelementes zwei einander zugeordnete Verbindungsleiter der Wechselspannungsnetze miteinander verbindbar sind und der Wirkleistungsaustausch zwischen den Wechselspannungsnetzen mittels gezielter Veränderung der Suszeptanzwerte steuerbar ist. Jedes Suszeptanzelement zeichnet sich insbesondere dadurch aus, dass dessen Suszeptanzwert stufenlos oder im Wesentlichen stufenlos veränderbar ist. Es wird vorliegend davon ausgegangen, dass die gegebenenfalls auftretenden Wirkverluste innerhalb der Suszeptanzelemente vernachlässigbar sind. Insbesondere ist der Konduktanzwert des Suszeptanzelements wesentlich kleiner als dessen höchster erreichbarer Suszeptanzwert, beispielsweise um einen Faktor 100, vorzugsweise um einen Faktor 1000 oder mehr. Die Suszeptanzelemente sind phasenweise zwischen die entsprechenden Verbindungsleiter der Wechselspannungsnetze schaltbar. Im Betrieb verbindet dann ein erstes Suszeptanzelement einen ersten Verbindungsleiter des ersten Wechselspannungsnetz mit einem ersten Verbindungsleiter des zweiten Wechselspannungsnetzes, und so weiter, wobei ein n-tes Suszeptanzelement einen n-ten Verbindungsleiter des ersten Wechselspannungsnetzes mit einem n-ten Verbindungsleiter des zweiten Wechselspannungsnetzes (unmittelbar oder mittelbar über einen Transformator) verbindet. Entsprechend weist jedes Suszeptanzelement zweckmäßigerweise zwei Anschlüsse zum Verbinden mit den jeweiligen Verbindungsleitern auf. Bei dreiphasigen zu verbindenden Wechselspannungsnetzen ist beispielsweise entsprechend vorzugehen. Geeigneterweise können diejenigen Verbindungsleiter der beiden Wechselspannungsnetze mittels der Suszeptanzelement miteinander verbunden werden, die jeweils etwa gleiche verkettete Spannungen und einen Phasenversatz zueinander aufweisen. Der Suszeptanzwert des i-ten Suszeptanzelementes wird mit $B_i$ bezeichnet. Für $B_i>0$ verhält sich das Suszeptanzelement wie eine Kapazität, für Bi<0 wie eine Induktivität. Die übertragbare Wirkleistung Ptrans folgt für den Fall, dass alle Suszeptanzwerte Bi gleich sind (Bi = B) der Gleichung Ptrans = 3 * B * ULL(1) * ULL(2) * sin(phi), wobei ULL(1) die verkettete Spannung im ersten Wechselspannungsnetz, ULL(2) die verkettete Spannung im zweiten Wechselspannungsnetz und phi die Spannungsphasendifferenz zwischen den Wechselspannungsnetzen bezeichnen. Mittels der Verbindungsvorrichtung kann demnach auf zuverlässige Weise sowohl ein Wirkleistungsaustausch zwischen den Wechselspannungsnetzen erzielt werden als auch ein Blindleistungsbedarf in den beiden Wechselspannungsnetzen beeinflusst werden. Die erfindungsgemäße Verbindungsvorrichtung ist zudem einfach im Aufbau und kostengünstig im Betrieb, da sie geringe Wirkleistungsverluste aufweist.

Für die Funktion der Verbindungsvorrichtung ist es von Vorteil, wenn die beiden Wechselspannungsnetze einen Phasenversatz phi zueinander aufweisen, d.h. dass die Netzspannungen der Wechselspannungsnetze zumindest zeitweise im Betrieb eine nichtverschwindende Phasenverschiebung bzw. unterschiedliche Spannungsphasenlagen aufweisen. Der für die Funktion der Verbindungsvorrichtung optimale Phasenversatz kann geeigneterweise unter Beachtung folgender Anforderungen festgelegt werden:

- Möglichst hoher Wirkleistungstransfer zwischen den beiden Wechselspannungsnetzen bei einem begrenzten Strom durch die Verbindungsvorrichtung, wodurch die Belastung von ggf. eingesetzten Halbleitern begrenzt werden kann;
- Begrenzte Spannungsbelastung der Verbindungsvorrichtung, wodurch die Betriebskosten reduzierbar sind;
- Gute Regelbarkeit sowie stabiler Betrieb auch bei leicht unterschiedlichen Spannungen oder bei Spannungsschwankungen in einem oder in beiden Wechselspannungsnetzen.

Als ein guter Kompromiss stellt sich beispielsweise der Wert phi = 30° heraus.

Eine einfache Realisierung eines Suszeptanzelementes ergibt sich, wenn das Suszeptanzelement mehrere steuerbare Halbleiterschalter sowie wenigstens einen Zwischenkreiskondensator umfasst. Mittels der Halbleiterschalter, die geeigneterweise abschaltbare Halbleiterschalter sind, wie beispielsweise IGBT, IGCT oder geeignete Feldeffekttransistoren, kann der Zwischenkreiskondensator wahlweise in den Strompfad geschaltet oder überbrückt werden. Eine geeignete Steuerung bzw. Taktung erlaubt damit die Erzeugung von Spannungen beliebiger Phasenlage an den Anschlüssen des Suszeptanzelementes.

Vorzugsweise umfasst jedes Suszeptanzelement eine Reihenschaltung von Schaltmodulen, wobei jedes Schaltmodul mehrere abschaltbare Halbleiterschalter sowie einen Schaltmodulkondensator als Zwischenkreiskondensator umfasst. Die Verwendung beispielsweise gleichartig aufgebauter Schaltmodule erlaubt einen modularen Aufbau der Suszeptanzelemente. Die Reihenschaltung vieler Schaltmodule ermöglicht die Erzeugung nahezu beliebiger Spannungsformen an den Anschlüssen der Verbindungsvorrichtung. Eine zentrale Steuerungsvorrichtung zur Steuerung der Schaltmodule bzw. Ansteuerung der entsprechenden Halbleiterschalter kann entsprechend vorgesehen sein.

Als besonders vorteilhaft wird angesehen, wenn jedes Suszeptanzelement eine Reihenschaltung von Vollbrückenschaltmodulen sowie eine Induktivität LA umfasst, die seriell zwischen die einander zugeordneten Verbindungsleiter schaltbar sind. Jedes Suszeptanzelement umfasst demnach einen ersten und einen zweiten Anschluss sowie eine Reihenschaltung der Vollbrückenschaltmodule, die in Reihenschaltung zwischen den Anschlüssen angeordnet sind. Durch geeignete Ansteuerung (Modulation) der m in Reihe geschalteten Vollbrückenschaltmodule kann insgesamt eine Summenspannung uA(t) erzeugt werden. Mit der erzeugten Spannung uA(t) kann mit der Induktivität LA ein Wechselstrom iA(t) eingestellt werden, der einem gewünschten Wechselstrom iAref(t) entspricht.

Es ist hierbei anzumerken, dass anstelle der Vollbrückenschaltmodule auch andere Schaltmodularten einsetzbar sind. Geeignet sind beispielsweise auch Anordnungen bestehend aus zwei 3-level NPC Halbbrückenschaltmodulen mit einem geteilten Zwischenkreiskondensator oder auch zwei 3-level Flying Capacitor Halbbrückenschaltmodulen oder ähnlichen.

Gemäß einer Ausführungsform der Erfindung umfasst die Verbindungsvorrichtung ferner einen Anpasstransformator zum Einstellen der Spannungsphasenlage. Mittels des Anpasstransformators kann beispielsweise eine Phasenverschiebung von phi=30° eingestellt werden. Zudem kann mittels des Anpasstransformators eine Anpassung der Spannungshöhe erreicht werden, falls Wechselspannungsnetze mit unterschiedlicher Spannung miteinander gekoppelt werden sollen. Ferner kann der Anpasstransformator zu einer galvanischen Trennung der Wechselspannungsnetze dienen. Des Weiteren kann die Streuinduktivität des Anpasstransformators vorteilhaft als die Induktivität LA genutzt werden, so dass auf zusätzliche Drosseln verzichtet werden kann.

Vorzugsweise umfasst der Anpasstransformator einen sogenannten Onload Tap Changer. Mit dieser Ausführung kann eine besonders schnelle Reaktion auf fluktuierende Spannungen reagiert werden.

Gemäß einer weiteren Ausführungsform der Erfindung umfasst die Verbindungsvorrichtung ferner Überspannungsableiter in Parallelschaltung zu den Suszeptanzelementen. In einem Fehlerfall, beispielsweise einem einpoligen oder mehrpoligem Kurzschluss, kann an einem oder mehreren der Suszeptanzelemente eine deutlich höhere Spannung anliegen, als es im Normalbetrieb der Fall ist. In einem ungünstigen Fall können in einem solchen Fehlerfall beispielsweise die Zwischenkreiskondensatoren über ein zulässiges Maß aufgeladen und im Endeffekt zerstört werden. Diese nachteilige Fehlerfolge kann durch die Überspannungsableiter, die beispielsweise Metalloxid-Ableiter sind, vermieden werden. Der jeweilige Überspannungsableiter kann einen im Fehlerfall entstandenen Fehlerstrom übernehmen, wodurch das zugeordnete Suszeptanzelement geschützt wird.

Gemäß einer Ausführungsform der Erfindung umfasst die Verbindungsvorrichtung 2*n Suszeptanzelemente, wobei die einander zugeordneten Verbindungsleiter jeweils mittels zwei parallel geschalteter Susteptanzelemente miteinander verbindbar sind. Die beiden einander zugeordneten Suszeptanzelemente bilden demnach zwei Parallelzweige. Die Suszeptanzelemente sind dabei geeigneterweise mittels der Steuerungseinrichtung derart ansteuerbar, dass sie mit einem Phasenversatz betrieben werden. Mit einer solchen Anordnung kann die transferierbare Wirkleistung vorteilhaft verdoppelt werden. Hierzu werden die Suszeptanzelemente der Parallelzweige beispielsweise derart angesteuert, dass ihre Suszeptanzwerte umgekehrte Vorzeichen haben.

Erfindungsgemäß umfasst die Verbindungsvorrichtung einen Transformator mit

- einer ersten Primärwicklung, die mit einem ersten Verbindungsleiter eines ersten Wechselspannungsnetzes verbindbar bzw. im Betrieb verbunden ist,
- einer zweiten Primärwicklung, die mit einem zweiten Verbindungsleiter des ersten Wechselspannungsnetzes verbindbar ist,
- einer dritten Primärwicklung, die mit einem dritten Verbindungsleiter des ersten Wechselspannungsnetzes verbindbar ist,
- einer ersten Sekundärwicklung, die mittels eines ersten Suszeptanzelementes mit einem ersten Verbindungsleiter eines zweiten Wechselspannungsnetzes verbindbar ist,
- einer zweiten Sekundärwicklung, die mittels eines zweiten Suszeptanzelementes mit einem zweiten Verbindungsleiter des zweiten Wechselspannungsnetzes verbindbar ist,
- einer dritten Sekundärwicklung, die mittels eines dritten Suszeptanzelementes mit einem dritten Verbindungsleiter des zweiten Wechselspannungsnetzes verbindbar ist,
- einer ersten Tertiärwicklung, die mittels eines vierten Suszeptanzelementes mit dem ersten Verbindungsleiter des zweiten Wechselspannungsnetzes verbindbar ist,
- einer zweiten Tertiärwicklung, die mittels eines fünften Suszeptanzelementes mit dem zweiten Verbindungsleiter des zweiten Wechselspannungsnetzes verbindbar ist,
- einer dritten Tertiärwicklung, die mittels eines sechsten Suszeptanzelementes mit dem dritten Verbindungsleiter des zweiten Wechselspannungsnetzes verbindbar ist,

wobei die Sekundärwicklungen und die Tertiärwicklung jeweils in Sternschaltungen verschaltet sind, die einen Phasenversatz von pi/3 gegenübereinander und jeweils pi/6 gegenüber den Primärwicklungen erzeugen.

Die Erfindung betrifft ferner ein Verfahren nach Anspruch 9 zum Betreiben einer Verbindungsvorrichtung, die zwei n-phasige Wechselspannungsnetze gleicher Frequenz verbindet.

Die Aufgabe der Erfindung besteht darin, ein solches Verfahren vorzuschlagen, dass einen möglichst effektiven und zuverlässigen Betrieb der Verbindungsvorrichtung ermöglicht.

Die Aufgabe wird erfindungsgemäß durch ein artgemäßes Verfahren gelöst, bei dem jeweils zwei einander zugeordnete Verbindungsleiter der Wechselspannungsnetze mittels eines von n Suszeptanzelementen miteinander verbunden werden, wobei der Suszeptanzwert eines jeden der Suszeptanzelemente stufenlos veränderbar ist, und mittels gezielter Veränderung der Suszeptanzwerte der Suszeptanzelemente eine Wirkleistungsübertragung zwischen den Wechselspannungsnetzen gesteuert wird. Die Vorteile des erfindungsgemäßen Verfahrens entsprechen insbesondere denjenigen, die bereits zuvor im Zusammenhang mit der erfindungsgemäßen Verbindungsvorrichtung beschrieben wurden.

Vorzugsweise wird die Spannungsphasenlage (bzw. die Spannungsphasendifferenz zwischen den Wechselspannungsnetzen) aktiv mittels der Verbindungsvorrichtung eingestellt. Durch eine aktive Einstellung der Spannungsphasenlage kann vorteilhaft eine Reduzierung der Auslegung der Suszeptanzelemente erreicht werden. Beispielsweise stellt sich eine Spannungsphasendifferenz phi = 30° als besonders vorteilhaft heraus. Daraus ergibt sich für die an den Suszeptanzelementen zu stellende Spannung uA = 0,42 ULL. Damit sind beispielsweise unter Umständen weniger als ein Drittel Vollbrückenschaltmodule gegenüber üblichen Anlagen für die Suszeptanzelemente notwendig. Die Spannungsphasenlage kann beispielsweise mittels eines Anpasstransformators eingestellt werden.

Geeigneterweise wird die Spannung über den Suszeptanzelementen mittels dazu parallel geschalteter Überspannungsableiter begrenzt.

Gemäß des Verfahrens umfasst die Verbindungsvorrichtung einen Transformator mit

- einer ersten Primärwicklung, die mit einem ersten Verbindungsleiter eines ersten Wechselspannungsnetzes verbunden ist,
- einer zweiten Primärwicklung, die mit einem zweiten Verbindungsleiter des ersten Wechselspannungsnetzes verbunden ist,

- einer dritten Primärwicklung, die mit einem dritten Verbindungsleiter des ersten Wechselspannungsnetzes verbunden ist,
- einer ersten Sekundärwicklung, die mittels eines ersten Suszeptanzelementes mit einem ersten Verbindungsleiter eines zweiten Wechselspannungsnetzes verbunden ist,
- einer zweiten Sekundärwicklung, die mittels eines zweiten Suszeptanzelementes mit einem zweiten Verbindungsleiter des zweiten Wechselspannungsnetzes verbunden ist,
- einer dritten Sekundärwicklung, die mittels eines dritten Suszeptanzelementes mit einem dritten Verbindungsleiter des zweiten Wechselspannungsnetzes verbunden ist,
- einer ersten Tertiärwicklung, die mittels eines vierten Suszeptanzelementes mit dem ersten Verbindungsleiter des zweiten Wechselspannungsnetzes verbunden ist,
- einer zweiten Tertiärwicklung, die mittels eines fünften Suszeptanzelementes mit dem zweiten Verbindungsleiter des zweiten Wechselspannungsnetzes verbunden ist,
- einer dritten Tertiärwicklung, die mittels eines sechsten Suszeptanzelementes mit dem dritten Verbindungsleiter des zweiten Wechselspannungsnetzes verbunden ist,

wobei die Sekundärwicklungen und die Tertiärwicklung jeweils in Sternschaltungen verschaltet sind, die einen Phasenversatz von pi/3 gegenübereinander und jeweils pi/6 gegenüber den Primärwicklungen erzeugen. Die mit der Sekundärseite des Transformators verbundenen Suszeptanzelemente bilden dabei einen ersten Verbindungszweig und die mit der Tertiärseite des Transformators verbundenen Suszeptanzelemente einen zweiten Verbindungszweig. Die Suszeptanzelemente werden hierbei derart angesteuert, dass sich der Blindleistungsbedarf der beiden Verbindungszweige kompensiert. Auf diese Weise kann vorteilhaft erreicht werden, dass von beiden Wechselspannungsnetzen netto keine Blindleistung bereitgestellt werden muss.

Die Erfindung wird im Folgenden anhand der Ausführungsbeispiele der Figuren 1 bis 5 weiter erläutert.

Figur 1 zeigt ein erstes Ausführungsbeispiel einer Verbindungsvorrichtung in einer schematischen Darstellung;

Figur 2 zeigt ein Beispiel eines Suszeptanzelementes in einer schematischen Darstellung;

Figur 3 zeigt ein zweites Ausführungsbeispiel einer Verbindungsvorrichtung in einer schematischen Darstellung;

Figur 4 zeigt ein Ausführungsbeispiel einer erfindungsgemäßen Verbindungsvorrichtung in einer schematischen Darstellung;

Figur 5 zeigt ein weiteres Beispiel eines Suszeptanzelementes in einer schematischen Darstellung.

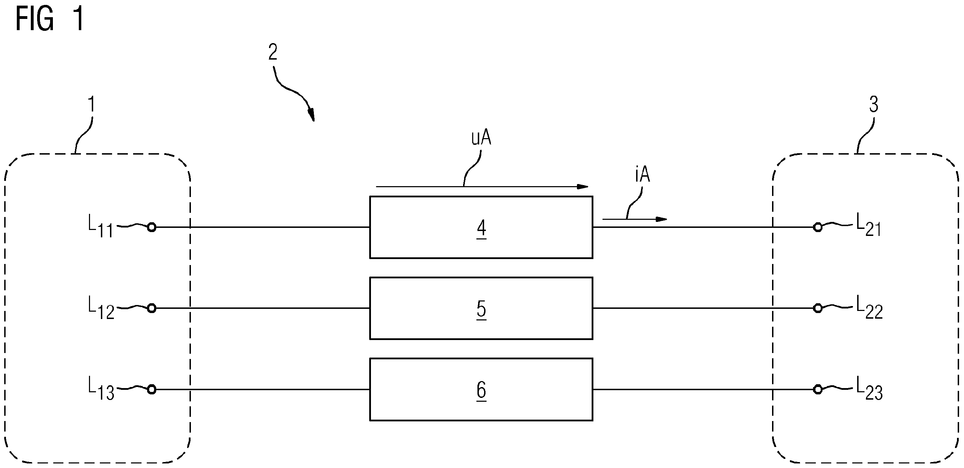

In Figur 1 ist ein erstes, dreiphasiges Wechselspannungsnetz 1 dargestellt, das mittels einer Verbindungsvorrichtung 2 mit einem zweiten, ebenfalls dreiphasigen Wechselspannungsnetz 3 verbunden ist. Das erste Wechselspannungsnetz 1 umfasst einen ersten, zweiten und dritten Verbindungsleiter L11, L12, L13. Entsprechend umfasst das zweite Wechselspannungsnetz 3 einen ersten, zweiten und dritten Verbindungsleiter L21, L22, L23 auf. Die Frequenz in beiden Wechselspannungsnetzen beträgt jeweils 50 Hz. Die Verbindungsvorrichtung 2 umfasst ein erstes Suszeptanzelement 4, mittels dessen der erste Verbindungsleiter L11 des ersten Wechselspannungsnetzes 1 mit dem ersten Verbindungsleiter L21 des zweiten Wechselspannungsnetzes 3 verbunden ist. Entsprechend sind die übrigen Verbindungsleiter L12, L13, L23, L33 mittels eines zweiten bzw. eines dritten Suszeptanzelementes 5 bzw. 6 miteinander verbunden.

Durch das erste Suszeptanzelement 4 fließt ein Strom iA. Die am Susteptanzelement 4 erzeugbare Spannung wird mit uA bezeichnet. Die verketteten Spannungen im ersten Wechselspannungsnetz 1 werden als ULL(1) und im zweiten Wechselspannungsnetz 3 als ULL(2) bezeichnet. Die Suszeptanz der Suszeptanzelemente 4-6 wird mit B bezeichnet. Die Spannungen der beiden Wechselspannungsnetze 1,3 weisen zueinander eine Spannungsdifferenz von phi auf. Die zwischen den beiden Wechselspannungsnetzen ausgetauschte Wirkleistung Ptrans ergibt sich aus Ptrans = 3 * B * ULL(1) * ULL(2) * sin(phi). In dieser Gleichung sind auftretenden Wirkleistungsverluste innerhalb der Suszeptanzelemente vernachlässigt. Durch Veränderung der Suszeptanzwerte B kann somit die zwischen den beiden Wechselspannungsnetzen transferierte Wirkleistung stufenlos verändert werden. Zudem kann, da der Suszeptanzwert sowohl positive als auch negative Werte annehmen kann, auch die Richtung der Leistungsübertragung gesteuert werden (bidirektionaler Wirkleistungstransport).

Zugleich gibt das erste Wechselspannungsnetz 1 eine Blindleistung Q1, das zweite Wechselspannungsnetz 3 eine Blindleistung Q2 gemäß den folgenden Gleichungen ab:

$$Q1 = 3 * B * (ULL(1) * ULL(2) * \cos(phi) - ULL(1)^2),$$

$$Q2 = 3 * B * (ULL(1) * ULL(2) * \cos(phi) - ULL(2)^2).$$

Die Blindleistungsabgabe der beiden Wechselspannungsnetze 1,3 ist ebenfalls von der Phasendifferenz phi abhängig. In Summe decken die beiden Wechselspannungsnetze 1, 3 den Blindleistungsbedarf der Suszeptanzelemente ab.

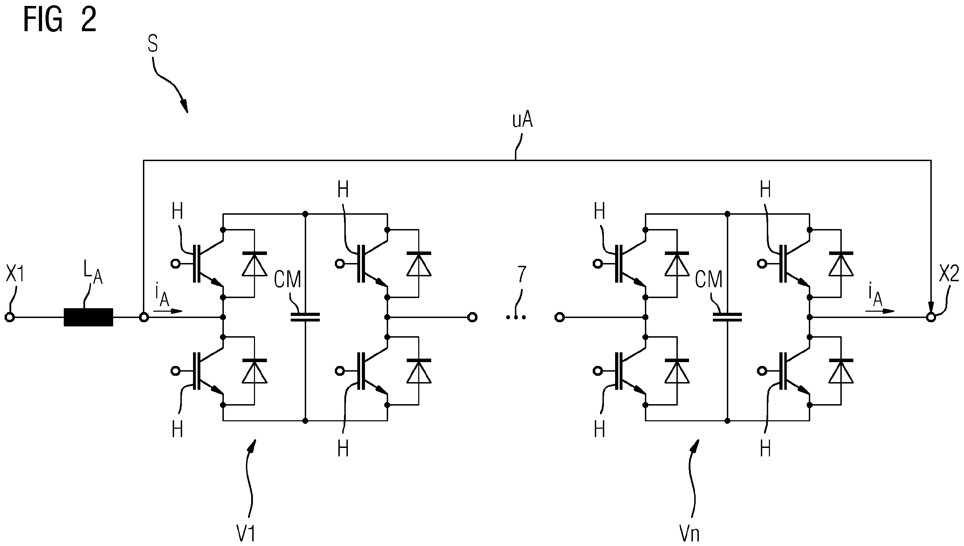

In Figur 2 ist ein Suszeptanzelement S dargestellt, das beispielsweise als eines der Suszeptanzelemente 4-6 der Figur 1 einsetzbar ist. Das Suszeptanzelement S umfasst einen ersten und einen zweiten Anschluss X1, X2. Zwischen den Anschlüssen X1,2 ist eine Reihenschaltung von Vollbrückenschaltmodulen V1...Vn angeordnet. Die Anzahl der in Reihe geschalteter Vollbrückenschaltmodule V1, Vn ist grundsätzlich beliebig und an die jeweilige Anwendung anpassbar, was in Figur 2 durch die gepunktete Linie 7 angedeutet ist. An den Vollbrückenschaltmodulen V1...Vn kann eine Summenspannung uA erzeugt werden. Dies geschieht mittels einer geeigneten Ansteuerung der Halbleiterschalter H der Vollbrückenschaltmodule V1...Vn. Jedes Vollbrückenschaltmodul V1...Vn umfasst ferner einen Schaltmodulenergiespeicher in Form eines Schaltmodulkondensators CM, der mittels der Halbleiterschalter H überbrückt oder in den Strompfad geschaltet werden kann. In Reihe mit den Vollbrückenschaltmodulen V1...Vn ist eine Induktivität LA geschaltet.

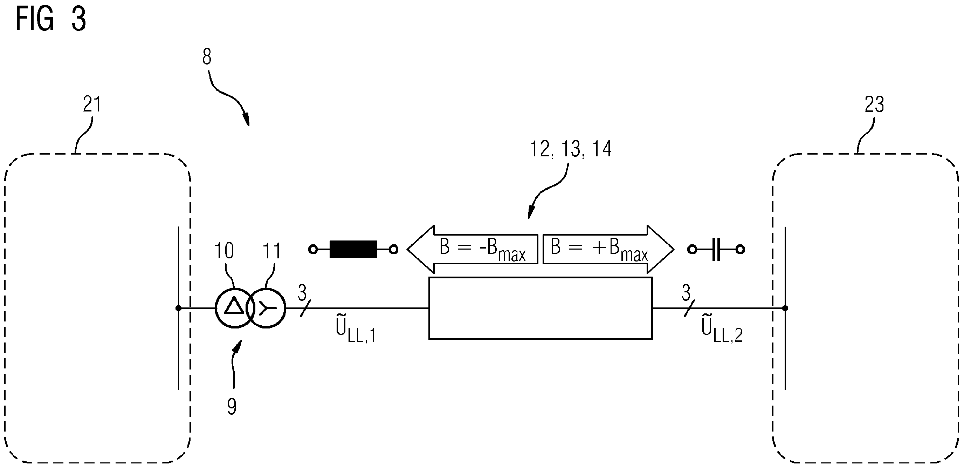

In Figur 3 ist eine weitere Verbindungsvorrichtung 8 dargestellt. Im Unterschied zur Verbindungsvorrichtung 2 der Figur 1 umfasst die Verbindungsvorrichtung 8 einen Anpasstransformator 9. Die Primärwicklungen 10 des Anpasstransformators 9 sind in einer Dreieckschaltung angeordnet und mit den Verbindungsleitungen des ersten Wechselspannungsnetzes 21 verbunden. Die Sekundärwicklungen 11 des Anpasstransformators 9 sind in einer Sternpunktschaltung miteinander verschaltet und mit drei Suszeptanzelementen 12, 13, 14 verbunden. Mittels des Anpasstransformators wird die Spannungsphasenverschiebung phi im dargestellten Beispiel auf 30° eingestellt. Hierbei eilt das zweite Wechselspannungsnetz 23 dem ersten Wechselspannungsnetz 21 um 30° (= pi/6) voraus. In dem ersten Wechselspannungsnetz 21 beträgt die Spannung im dargestellten Beispiel 8 kV. Die Spannung im zweiten Wechselspannungsnetz 23 beträgt 20 kV. Die Frequenz ist bei beiden 50 Hz. Die zwischen den Wechselspannungsnetzen 21,23 übertragene Wirkleistung kann ca. 30 MW bei einem Strom iA von 850 A betragen.

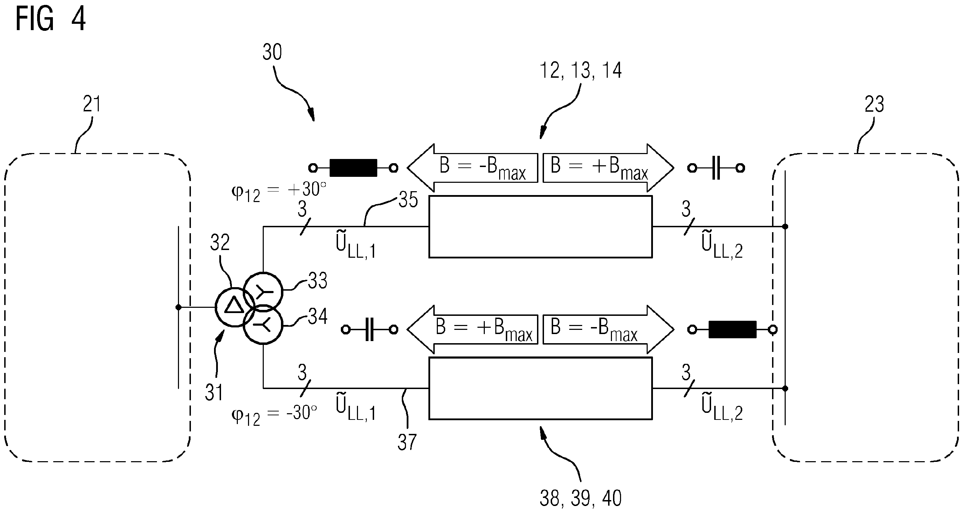

In Figur 4 ist eine erfindungsgemäße Verbindungsvorrichtung 30 dargestellt, die das erste Wechselspannungsnetz 21 mit dem zweiten Wechselspannungsnetz 23 verbindet. Die Verbindungsvorrichtung 30 umfasst einen Transformator 31. Der Transformator 31 umfasst in einer Dreieckschaltung verbundene Primärwicklungen 32, die mit zugeordneten Verbindungsleitungen des ersten Wechselspannungsnetzes 21 verbunden sind. Der Transformator 31 umfasst ferner Sekundärwicklungen 33, die in einer Sternschaltung miteinander verschaltet und mit einem ersten (dreiphasigen) Parallelzweig 35 verbunden sind, sowie Tertiärwicklungen 36, die ebenfalls in einer Sternschaltung miteinander verschaltet und mit einem zweiten Parallelzweig 37 verbunden sind.

Im ersten Parallelzweig 35 sind drei Suszeptanzelemente 12-14 angeordnet, im zweiten Parallelzweig 37 sind drei weitere Suszeptanzelemente 38-40 angeordnet. Die drei Suszeptanzelemente verbinden die Sekundärwicklungen 33 mit den zugeordneten Verbindungsleitern des zweiten Wechselspannungsnetzes 23. Entsprechen verbinden die weiteren Suszeptanzelemente 38-40 die Tertiärwicklungen 34 mit den entsprechend zugeordneten Verbindungselementen des zweiten Wechselspannungsnetzes 23. Die Sekundärwicklungen 33 und die Tertiärwicklungen 34 sind jeweils in Sternschaltungen verschaltet, die einen Phasenversatz von pi/3 gegenübereinander und jeweils pi/6 gegenüber den Primärwicklungen erzeugen. Die Suszeptanzelemente 12-14, 38-40 werden jeweils derart betrieben, dass die Suszeptanz im ersten Parallelzweig 35 und die Suszeptanz im zweiten Parallelzweig 37 jeweils ein anderes Vorzeichen haben. In diesem Fall verhält sich der erste Parallelzweig 35 wie eine Kapazität und der zweite Parallelzweig 37 wie eine Induktivität. Sind beide Netzspannungen gleich und werden die Parallelzweige antisymmetrisch angesteuert, dann kompensiert sich der Blindleistungsbedarf der beiden Parallelzweige und es muss mittels der beiden Wechselspannungsnetze netto keine Blindleistung bereitgestellt werden. Durch unsymmetrische Ansteuerung der Suszeptanzelemente in den beiden Parallelzweigen 35, 37 kann darüber hinaus (bei etwa gleicher Spannung) dafür gesorgt werden, dass in den beiden Wechselspannungsnetzen 21, 23 Blindleistung erzeugt wird.

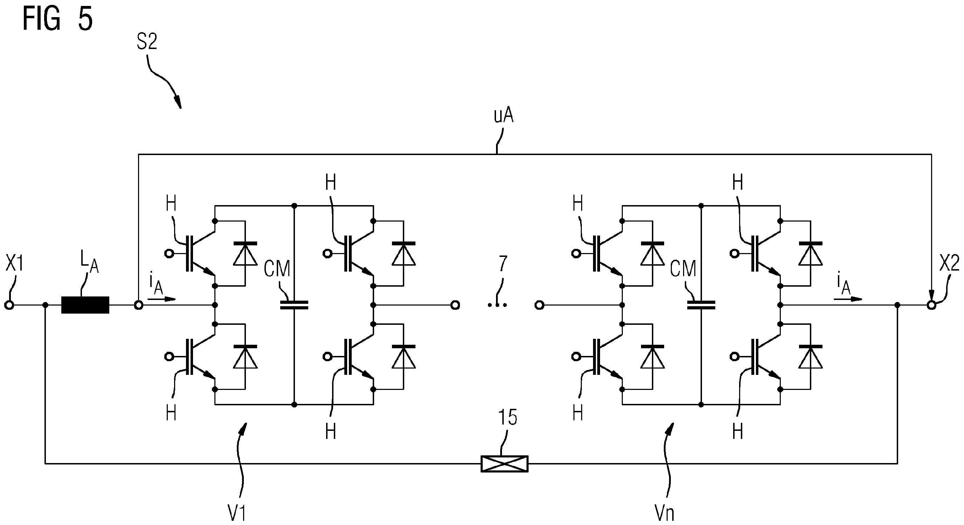

In Figur 5 ist ein weiteres Suszeptanzelement S2 dargestellt, das insbesondere in allen zuvor gezeigten Verbindungsvorrichtungen einsetzbar ist. Im Unterschied zum Suszeptanzelement S der Figur 2 (alle gleichen und gleichartigen Bauteile und Elemente der Figuren 2 und 5 sind mit gleichen Bezugszeichen versehen) ist hierbei ein Überspannungsableiter 15 vorgesehen, der in einem Parallelzweig zu der Reihenschaltung der Schaltmodule V1...Vn angeordnet ist. Mittels des Überspannungsableiters 15 können insbesondere die Kondensatoren CM und die Halbleiter H im Fehlerfall solange geschützt werden, bis durch mechanische Leistungsschalter (in Figur 5 nicht dargestellt) die Verbindungsvorrichtung von den beiden Wechselspannungsnetzen getrennt ist.

**Patentansprüche**

1. Verbindungsvorrichtung (2) zum Verbinden zweier n-phasiger Wechselspannungsnetze (1,3) gleicher Frequenz, umfassend n Suszeptanzelemente (4-6) mit jeweils stufenlos veränderbaren Suszeptanzwerten, wobei mittels jedes Suszeptanzelementes (4-6) zwei einander zugeordnete Verbindungsleiter der Wechselspannungsnetze (1,3) miteinander verbindbar sind und der Wirkleistungsaustausch zwischen den Wechselspannungsnetzen mittels gezielter Veränderung der Suszeptanzwerte steuerbar ist, **dadurch gekennzeichnet, dass**

   die Verbindungsvorrichtung einen Transformator (31) umfasst mit

   - einer ersten Primärwicklung, die mit einem ersten Verbindungsleiter eines ersten Wechselspannungsnetzes verbunden ist,
   - einer zweiten Primärwicklung, die mit einem zweiten Verbindungsleiter des ersten Wechselspannungsnetzes verbunden ist,
   - einer dritten Primärwicklung, die mit einem dritten Verbindungsleiter des ersten Wechselspannungsnetzes verbunden ist,
   - einer ersten Sekundärwicklung, die mittels eines ersten Suszeptanzelementes mit einem ersten Verbindungsleiter eines zweiten Wechselspannungsnetzes verbunden ist,
   - einer zweiten Sekundärwicklung, die mittels eines zweiten Suszeptanzelementes mit einem zweiten Verbindungsleiter des zweiten Wechselspannungsnetzes verbunden ist,
   - einer dritten Sekundärwicklung, die mittels eines dritten Suszeptanzelementes mit einem dritten Verbindungsleiter des zweiten Wechselspannungsnetzes verbunden ist,
   - einer ersten Tertiärwicklung, die mittels eines vierten Suszeptanzelementes mit dem ersten Verbindungsleiter des zweiten Wechselspannungsnetzes verbunden ist,
   - einer zweiten Tertiärwicklung, die mittels eines fünften Suszeptanzelementes mit dem zweiten Verbindungsleiter des zweiten Wechselspannungsnetzes verbunden ist,
   - einer dritten Tertiärwicklung, die mittels eines sechsten Suszeptanzelementes mit dem dritten Verbindungsleiter des zweiten Wechselspannungsnetzes verbunden ist,

   wobei die Sekundärwicklungen und die Tertiärwicklungen jeweils in Sternschaltungen verschaltet sind, die einen Phasenversatz von pi/3 gegenübereinander und jeweils pi/6 gegenüber den Primärwicklungen erzeugen.

2. Verbindungsvorrichtung (2) nach Anspruch 1, wobei jedes Suszeptanzelement mehrere steuerbare Halbleiterschalter (H) sowie wenigstens einen Zwischenkreiskondensator (CM) umfasst.

3. Verbindungseinrichtung (2) nach einem der vorangehenden Ansprüche, wobei jedes Suszeptanzelement (4-6) eine Reihenschaltung von Schaltmodulen (S) umfasst, wobei jedes Schaltmodul (S) mehrere abschaltbare Halbleiterschalter (H) sowie einen Schaltmodulkondensator (CM) umfasst.

4. Verbindungseinrichtung (2) nach einem der vorangehenden Ansprüche, wobei jedes Suszeptanzelement (4-6) eine Reihenschaltung von Vollbrückenschaltmodulen (S) sowie eine Induktivität umfasst, die seriell zwischen die einander zugeordneten Verbindungsleiter (Lij) schaltbar sind.

5. Verbindungsvorrichtung (8) nach einem der vorangehenden Ansprüche, wobei die Verbindungsvorrichtung (8) ferner einen Anpasstransformator (9) zum Einstellen der Spannungsphasenlage umfasst.

6. Verbindungsvorrichtung (8) nach Anspruch 5, wobei der Anpasstransformator (9) einen Onload Tap Changer umfasst.

7. Verbindungsvorrichtung (2) nach einem der vorangehenden Ansprüche, wobei die Verbindungsvorrichtung (2) ferner Überspannungsableiter (15) in Parallelschaltung zu den Suszeptanzelementen (S2) umfasst.

8. Verbindungsvorrichtung (30) nach einem der vorangehenden Ansprüche, wobei die Verbindungsvorrichtung (30) 2*n Suszeptanzelemente (12-14, 38-40) umfasst, wobei die einander zugeordneten Verbindungsleiter jeweils mittels zwei parallel geschalteter Susteptanzelemente miteinander verbindbar sind.

9. Verfahren zum Betreiben einer Verbindungsvorrichtung (2), die zwei n-phasige Wechselspannungsnetze (1,3) gleicher Frequenz verbindet, bei dem jeweils zwei einander zugeordnete Verbindungsleiter (Lij) der Wechselspannungsnetze mittels eines von n Suszeptanzelementen (4-6) miteinander verbunden werden, wobei der Suszeptanzwert eines jeden der Suszeptanzelemente (4-6) stufenlos veränderbar ist, und

mittels gezielter Veränderung der Suszeptanzwerte der Suszeptanzelemente (4-6) eine Wirkleistungsübertragung zwischen den Wechselspannungsnetzen (1,3) gesteuert wird, wobei die Verbindungsvorrichtung eine Verbindungseinrichtung nach einem der Ansprüche 1 bis 8 ist, wobei die mit der Sekundärseite (33) des Transformators (31) verbundenen Suszeptanzelemente einen ersten Verbindungszweig (35) und die mit der Tertiärseite (34) des Transformators verbundenen Suszeptanzelemente einen zweiten Verbindungszweig (37) bilden, und die Suszeptanzelemente derart angesteuert werden, dass sich der Blindleistungsbedarf der beiden Verbindungszweige (35,37) kompensiert.

10. Verfahren nach Anspruch 9, wobei die Spannungsphasenlage aktiv mittels der Verbindungsvorrichtung eingestellt wird.

11. Verfahren nach Anspruch 10, wobei die Spannungsphasenlage auf 30° eingestellt wird.

12. Verfahren nach Anspruch 10 oder 11, wobei die Spannungsphasenlage mittels eines Anpasstransformators (g) eingestellt wird.

13. Verfahren nach einem der Ansprüche 9 bis 12, wobei die Spannung über den Suszeptanzelementen mittels dazu parallel geschalteter Überspannungsableiter (15) begrenzt wird.

**Claims**

1. Connecting device (2) for connecting two n-phase AC voltage grids (1, 3) of the same frequency, comprising n susceptance elements (4-6) with continuously variable susceptance values in each case, wherein, by means of each susceptance element (4-6), two connecting conductors, that are associated with one another, of the AC voltage grids (1, 3) can be connected to one another and the exchange of active power between the AC voltage grids can be controlled by means of targeted variation of the susceptance values, **characterized in that**

   the connecting device comprises a transformer (31) having

   - a first primary winding that is connected to a first connecting conductor of a first AC voltage grid,
   - a second primary winding that is connected to a second connecting conductor of the first AC voltage grid,
   - a third primary winding that is connected to a third connecting conductor of the first AC voltage grid,
   - a first secondary winding that is connected to a first connecting conductor of a second AC voltage grid by means of a first susceptance element,
   - a second secondary winding that is connected to a second connecting conductor of the second AC voltage grid by means of a second susceptance element,
   - a third secondary winding that is connected to a third connecting conductor of the second AC voltage grid by means of a third susceptance element,
   - a first tertiary winding that is connected to the first connecting conductor of the second AC voltage grid by means of a fourth susceptance element,
   - a second tertiary winding that is connected to the second connecting conductor of the second AC voltage grid by means of a fifth susceptance element,
   - a third tertiary winding that is connected to the third connecting conductor of the second AC voltage grid by means of a sixth susceptance element,

   wherein the secondary windings and the tertiary windings are each interconnected in star connections that generate a phase offset of pi/3 relative to one another and respectively pi/6 relative to the primary windings.

2. Connecting device (2) according to Claim 1, wherein each susceptance element comprises a plurality of controllable semiconductor switches (H) and at least one DC-link capacitor (CM) .

3. Connecting device (2) according to either of the preceding claims, wherein each susceptance element (4-6) comprises a series circuit of switching modules (S), wherein each switching module (S) comprises a plurality of semiconductor switches (H) that can be switched off and a switching module capacitor (CM).

4. Connecting device (2) according to one of the preceding claims, wherein each susceptance element (4-6) comprises a series circuit of full-bridge switching modules (S) and an inductor that can be connected in series between the connecting conductors (Lij) that are associated with one another.

5. Connecting device (8) according to one of the preceding claims, wherein the connecting device (8) also comprises a matching transformer (9) for setting the voltage phase angle.

6. Connecting device (8) according to Claim 5, wherein the matching transformer (9) comprises an on-load tap changer.

7. Connecting device (2) according to one of the preceding claims, wherein the connecting device (2) also comprises surge arresters (15) connected in parallel with the susceptance elements (S2).

8. Connecting device (30) according to one of the preceding claims, wherein the connecting device (30) comprises 2*n susceptance elements (12-14, 38-40), wherein the connecting conductors that are associated with one another can be connected to one another in each case by means of two susceptance elements connected in parallel.

9. Method for operating a connecting device (2) that connects two n-phase AC voltage grids (1, 3) of the same frequency, in which in each case two connecting conductors (Lij), that are associated with one another, of the AC voltage grids are connected to one another by means of one of n susceptance elements (4-6), wherein the susceptance value of each of the susceptance elements (4-6) is continuously variable, and a transfer of active power between the AC voltage grids (1, 3) is controlled by means of targeted variation of the susceptance values of the susceptance elements (4-6), wherein the connecting device is a connecting apparatus according to one of Claims 1 to 8, wherein the susceptance elements connected to the secondary side (33) of the transformer (31) form a first connecting branch (35) and the susceptance elements connected to the tertiary side (34) of the transformer form a second connecting branch (37), and the susceptance elements are actuated in such a way that the reactive power requirement of the two connecting branches (35, 37) is compensated for.

10. Method according to Claim 9, wherein the voltage phase angle is actively set by means of the connecting device.

11. Method according to Claim 10, wherein the voltage phase angle is set to 30°.

12. Method according to Claim 10 or 11, wherein the voltage phase angle is set by means of a matching transformer (g).

13. Method according to one of Claims 9 to 12, wherein the voltage across the susceptance elements is limited by means of surge arresters (15) connected in parallel with them.

**Revendications**

1. Dispositif (2) de connexion pour connecter deux réseaux (1, 3) en tension alternative à n phases de même fréquence, comprenant n éléments (4 - 6) de susceptance ayant chacun des valeurs de susceptance variables de manière continue, dans lequel, au moyen de chaque élément (4 - 6) de susceptance, deux conducteurs de connexion, associés l'un à l'autre, des réseaux (1, 3) en tension alternative peuvent être connectés l'un à l'autre et l'échange de puissance active entre les réseaux en tension alternative peut être commandé au moyen d'un variation ciblée des valeurs de susceptance, **caractérisé en ce que**

le dispositif de connexion comprend un transformateur (31) comprenant

- un premier enroulement primaire, qui est connecté à un premier conducteur de connexion d'un premier réseau en tension alternative,
- un deuxième enroulement primaire, qui est connecté à un deuxième conducteur de connexion du premier réseau en tension alternative,
- un troisième enroulement primaire, qui est connecté à un troisième conducteur de connexion du premier réseau en tension alternative,
- un premier enroulement secondaire, qui, au moyen d'un premier élément de susceptance, est connecté à un premier conducteur de connexion d'un deuxième réseau en tension alternative,
- un deuxième enroulement secondaire, qui, au moyen d'un deuxième élément de susceptance, est connecté à un deuxième conducteur de connexion du deuxième réseau en tension alternative,

- un troisième enroulement secondaire, qui, au moyen d'un troisième élément de susceptance, est connecté à un troisième conducteur de connexion du deuxième réseau en tension alternative,
- un premier enroulement tertiaire, qui, au moyen d'un quatrième élément de susceptance, est connecté au premier conducteur de connexion du deuxième réseau en tension alternative,
- un deuxième enroulement tertiaire, qui, au moyen d'un cinquième élément de susceptance, est connecté au deuxième conducteur de connexion du deuxième réseau en tension alternative,
- un troisième enroulement tertiaire, qui, au moyen d'un sixième élément de susceptance, est connecté au troisième conducteur de connexion du deuxième réseau en tension alternative,

dans lequel les enroulements secondaires et les enroulements tertiaires sont montés respectivement en montage en étoile, qui produisent un déphasage de pi/3 les uns par rapport aux autres et respectivement de pi/6 par rapport aux enroulements primaires.

2. Dispositif (2) de connexion suivant la revendication 1, dans lequel chaque élément de susceptance comprend plusieurs interrupteurs (H) à semiconducteur pouvant être commandés, ainsi qu'au moins un condensateur (CM) de circuit intermédiaire.

3. Dispositif (2) de connexion suivant l'une des revendications précédentes, dans lequel chaque élément (4 - 6) de susceptance comprend un circuit série de modules (S) de coupure, dans lequel chaque module (S) de coupure comprend plusieurs interrupteurs (H) à semiconducteur pouvant être ouverts, ainsi qu'un condensateur (CM) de modules de coupure.

4. Dispositif (2) de connexion suivant l'une des revendications précédentes, dans lequel chaque élément (4 - 6) de susceptance comprend un circuit série de modules (S) de coupure à pont complet, ainsi qu'une inductance, qui sont montés en série entre les conducteurs (Lij) de connexion associés les uns aux autres.

5. Dispositif (8) de connexion suivant l'une des revendications précédentes, dans lequel le dispositif (8) de connexion comprend en outre un transformateur (9) d'adaptation pour le réglage de la position en phase de la tension.

6. Dispositif (8) de connexion suivant la revendication 5, dans lequel le dispositif (9) d'adaptation comprend un onload tap changer.

7. Dispositif (2) de connexion suivant l'une des revendications précédentes, dans lequel le dispositif (2) de connexion comprend en outre un parafoudre (15) en montage parallèle avec les éléments (S2) de susceptance.

8. Dispositif (30) de connexion suivant l'une des revendications précédentes, dans lequel le dispositif (30) de comprend 2*n éléments (12 - 14, 38 - 40) de susceptance, dans lequel les conducteurs de connexion associés entre eux peuvent être connectés entre eux respectivement au moyen de deux éléments de susceptance montés en parallèle.

9. Procédé pour faire fonctionner un dispositif (2) de connexion, qui relie deux réseaux (1, 3) en tension alternative à n phases de même fréquence, dans lequel respectivement deux conducteurs (Lij) de connexion associés l'un à l'autre des réseaux en tension alternative sont connectés entre eux au moyen de n éléments (4 - 6) de susceptance, dans lequel la valeur de susceptance de l'un de chacun des éléments (4 - 6) de susceptance est variable d'une manière continue et, au moyen d'une variation ciblée, des valeurs de susceptance des éléments (4 - 6) de susceptance, on commande une transmission de puissance active entre les réseaux (1, 3) de tension alternative, dans lequel le dispositif de connexion est un dispositif de connexion suivant l'une des revendications 1 à 8, dans lequel les éléments de susceptance connectés au côté (33) secondaire du transformateur (31) forment une première branche (35) de connexion et les éléments de susceptance connectés au côté (34) tertiaire du transformateur forment une deuxième branche (37) de connexion, et on commande les éléments de susceptance de manière à compenser le besoin de puissance réactive des deux branches (35, 37) de connexion.

10. Procédé suivant la revendication 9, dans lequel on règle le déphasage en tension de manière active au moyen du dispositif de connexion.

11. Procédé suivant la revendication 10, dans lequel on règle le déphasage en tension à 30°.

12. Procédé suivant la revendication 10 ou 11, dans lequel on règle le déphasage au moyen d'un transformateur (g) d'adaptation.

**13.** Procédé suivant l'une des revendications 9 à 12, dans lequel on limite la tension aux bornes des éléments de susceptance au moyen de parafoudres (15), qui y sont montés en parallèle.

EP 3 977 580 B1

# FIG 1

FIG 2

EP 3 977 580 B1

FIG 3

EP 3 977 580 B1

EP 3 977 580 B1

FIG 4

FIG 5

EP 3 977 580 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017101963 A
- EP 0129492 A2
- EP 3518366 A2